# FASCICULE DE BREVET EUROPEEN

(11) **EP 1 245 432 B1**
(45) Date de publication et mention de la délivrance du brevet: **27.04.2011**
(21) Numéro de dépôt: 02290398.3
(22) Date de dépôt: 19.02.2002
(51) Int. Cl.: B60L 11/18

(54) **Procédé et dispositif de pilotage de l'alimentation en énergie électrique d'un véhicule a traction électrique destiné à fonctionner en mode d'alimentation externe ou en mode d'alimentation autonome**
Verfahren und Vorrichtung zur Steuerung der elektrischen Energieversorgung eines elektrisch angetriebenen Fahrzeuges, bestimmt zum Betrieb in externem oder autonomen Mode
Method and device of controlling the electric power supply of an electric driven vehicle for operation in an external mode or an autonomous mode

(30) Priorité: 29.03.2001 FR 0104276
(43) Date de publication de la demande: 02.10.2002
(73) Titulaire: ALSTOM Transport SA, 92300 Levallois-Perret (FR)
(72) Inventeur: Deleu, Arnaud, 45000 Orleans (FR); Nogaret, Philippe, 65360 Salles-Adour (FR)

(56) Documents cités:
- EP-A- 0 982 176
- WO-A-00/37279
- DE-A- 2 338 222
- FR-A- 2 782 680
- US-A- 3 924 084

## Description

La présente invention se rapporte à un procédé et à un dispositif de pilotage de l'alimentation électrique d'un véhicule à traction électrique destiné à fonctionner en mode d'alimentation externe ou en mode d'alimentation autonome en fonction de la présence ou de l'absence d'une infrastructure d'alimentation externe le long de la voie de circulation du véhicule. L'invention se rapporte notamment à l'alimentation en énergie électrique de véhicules de type tramway.

Il est connu de la demande de brevet FR-A1-2 782 680 déposée par la demanderesse, un système d'alimentation de véhicules à traction électrique permettant de faire circuler des véhicules de transport en commun, tels que des tramways de grande capacité, sans faire appel à une alimentation continue par caténaire. Un tel système comporte alors un dispositif d'alimentation autonome embarqué à bord du véhicule, constitué d'un moteur électrique pourvu d'un volant d'inertie de forte masse, et des stations d'arrêts munies d'une caténaire permettant la recharge en énergie du dispositif d'alimentation autonome au moyen d'un pantographe porté par le véhicule.

Un tel système d'alimentation présente toutefois l'inconvénient de nécessiter la détection de la connexion du pantographe à la caténaire, afin de gérer au mieux le basculement d'un mode d'alimentation à l'autre et d'optimiser les performances du système d'alimentation. De plus, il est nécessaire, pour optimiser les performances du véhicule, que le véhicule soit toujours alimenté en énergie électrique par le dispositif d'alimentation autonome ou par la caténaire, ce qui conduit à avoir des phases de transition durant lesquelles le véhicule est à la fois raccordé au dispositif d'alimentation autonome et à la caténaire. Or, lors de ces phases de transition, il arrive que le dispositif d'alimentation autonome soit actif, c'est à dire utilisé en tant que générateur d'énergie, avec une tension de sortie supérieure à la tension caténaire, entraînant ainsi une perte d'énergie du dispositif d'alimentation autonome vers la caténaire accompagnée d'une décharge rapide et pénalisante du dispositif d'alimentation autonome. Un autre inconvénient d'un tel système d'alimentation est la formation possible d'un arc électrique lors du décollement du pantographe de la caténaire provoquant une usure rapide de ces différents éléments.

L'invention vise donc à remédier à ces inconvénients en proposant un procédé et un dispositif de pilotage de l'alimentation en énergie électrique d'un véhicule à traction électrique fonctionnant en mode d'alimentation autonome ou en mode d'alimentation externe, qui permette la détection du raccordement du véhicule à une infrastructure d'alimentation externe et qui assure l'optimisation de la gestion des phases de transition entre les deux modes d'alimentation tout en étant simple et économique à réaliser.

L'invention a pour objet un procédé de pilotage de l'alimentation en énergie électrique d'un véhicule à traction électrique destiné à fonctionner en mode d'alimentation externe ou en mode d'alimentation autonome, en fonction de la présence ou de l'absence d'une infrastructure d'alimentation externe le long de la voie de circulation du véhicule, le véhicule comportant un bus d'alimentation continu connecté à la fois à un système d'alimentation autonome embarqué à bord du véhicule et à une ligne d'alimentation externe pouvant être raccordée à une infrastructure d'alimentation externe au moyen d'un organe de connexion, caractérisé en ce qu'on détecte le raccordement dudit organe de connexion avec ladite infrastructure d'alimentation externe en mesurant le courant traversant la ligne d'alimentation externe, la présence d'un courant non nul dans la ligne d'alimentation externe signalant la présence d'une infrastructure d'alimentation externe connectée audit organe de connexion.

Selon une caractéristique du procédé selon l'invention, lorsque le véhicule se trouve dans une phase d'alimentation transitoire durant laquelle le bus alimentation continu est simultanément alimenté en énergie par le système d'alimentation autonome et raccordé à la l'infrastructure d'alimentation externe, on pilote la tension de sortie du système d'alimentation autonome de manière à ce que le courant traversant la ligne d'alimentation externe soit sensiblement nul ;

Selon une autre caractéristique du procédé selon l'invention, lorsque le véhicule circule en étant alimenté par le seul système d'alimentation autonome et parvient sur une zone équipée d'une infrastructure d'alimentation externe, on procède aux étapes suivantes :
- détection du raccordement de l'organe de connexion avec l'infrastructure d'alimentation externe par l'apparition d'un courant non nul dans la ligne d'alimentation ;
- pilotage de la tension de sortie du système d'alimentation autonome de manière à annuler sensiblement le courant de la ligne d'alimentation externe ;
- arrêt de la fourniture d'énergie par le système d'alimentation autonome en direction du bus d'alimentation continu.

Selon encore une autre caractéristique du procédé selon l'invention, lorsque le véhicule circule en étant alimenté par la seule ligne d'alimentation externe et parvient sur une zone non équipée d'une infrastructure d'alimentation externe, on procède préalablement à la déconnexion de l'organe de connexion avec l'infrastructure d'alimentation externe aux étapes suivantes :
- mise en marche du système d'alimentation autonome de manière à ce que ce dernier fournisse de l'énergie au bus d'alimentation continu ;
- pilotage de la tension de sortie du système d'alimentation autonome de manière à annuler sensiblement le courant de la ligne d'alimentation externe.

L'invention concerne également un dispositif de pilotage de l'alimentation en énergie électrique d'un véhicule à traction électrique destiné à fonctionner en mode d'alimentation autonome ou en mode d'alimentation externe, en fonction de la présence ou non d'une infrastructure d'alimentation externe le long de la voie de circulation dudit véhicule, le véhicule comportant un bus d'alimentation continu connecté à la fois à un système d'alimentation autonome embarqué à bord du véhicule et à une ligne d'alimentation externe pouvant être raccordée à une infrastructure d'alimentation externe au moyen d'un organe de connexion, caractérisé en ce qu'il comporte un capteur de courant permettant de mesurer le courant circulant au travers de la ligne d'alimentation externe afin de détecter le raccordement de l'organe de connexion à l'infrastructure d'alimentation externe.

Selon des modes particuliers de réalisation, le dispositif de pilotage de l'alimentation électrique du véhicule peut comprendre l'une ou plusieurs des caractéristiques suivantes prises isolément ou selon toutes les combinaisons techniquement possibles :
- le système d'alimentation autonome est muni d'un module de commande permettant de modifier la tension de sortie du système d'alimentation autonome ;
- le système d'alimentation autonome est constitué d'un système à accumulation cinétique d'énergie à volant d'inertie ;
- l'organe de connexion est constitué d'un pantographe porté par le véhicule et coopérant avec une infrastructure d'alimentation externe constituée d'une caténaire.

On comprendra mieux les buts, aspects et avantages de la présente invention, d'après la description donnée ci-après d'un mode de réalisation de l'invention, présenté à titre d'exemple non limitatif, en se référant au dessin annexé, dans lesquels :
- la figure 1 est une vue schématique de l'alimentation électrique d'un tramway équipé d'un dispositif de pilotage selon l'invention ;
- la figure 2 est un schéma illustrant la régulation du courant dans la ligne d'alimentation externe par le procédé de pilotage selon l'invention lorsque le bus d'alimentation continu du tramway est simultanément alimenté par le système d'alimentation autonome et par la caténaire.

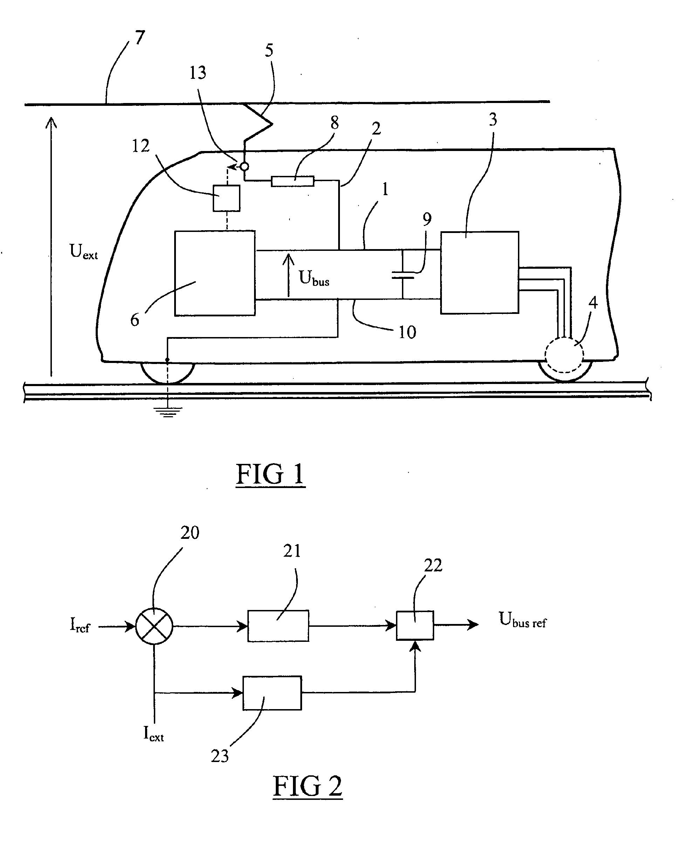

La figure 1 représente un schéma d'un système d'alimentation électrique d'un véhicule ferroviaire, de type tramway, équipé de moteurs de traction électriques réversibles 4, c'est à dire absorbant de l'énergie électrique pendant les moments de traction et fournissant de l'énergie électrique pendant les moments de freinage.

Ces moteurs de traction sont commandés par un module de traction 3 qui est raccordé à un bus d'alimentation continu 1 alimenté d'une part en régime conventionnel par une ligne d'alimentation externe 2 et d'autre part, en régime autonome par un système d'alimentation autonome 6 embarqué à bord du tramway. Les moteurs de tractions 4 sont, à titre d'exemple non limitatif, des moteurs triphasés, le module de traction 3 étant alors constitué d'un onduleur. Le module de traction 3 est raccordé à un câble 10 réalisant le retour du courant à la terre par conduction au travers des roues du tramway et des rails de la voie.

La ligne d'alimentation externe 2 est muni à son extrémité d'un pantographe 5 disposé sur le toit du tramway et destiné à coopérer avec une caténaire 7 lorsque le tramway circule sur une portion de voie équipée d'une telle infrastructure. La ligne d'alimentation externe 2 est munie d'une impédance de filtrage 8 disposée entre le pantographe 5 et le bus d'alimentation continu 1, une capacité 9 étant connectée entre le bus continu 1 et le câble 10 de retour à la terre.

Le système d'alimentation autonome 6 est constitué d'un système à accumulation cinétique d'énergie comportant un moteur électrique synchrone à aimants dont le rotor entraîne un volant d'inertie, ce moteur étant associé à un convertisseur ou à un accumulateur avec un hacheur deux quadrants permettant le pilotage de la tension de sortie du système d'alimentation d'autonome. En régime de recharge, le volant d'inertie est entraîné par le moteur à une vitesse élevée, et en régime de décharge, le moteur fonctionne en génératrice en fournissant de l'énergie au module de traction 3.

La tension de sortie du système d'alimentation autonome 6 est pilotée par un module de commande 12 qui reçoit des informations d'un capteur de courant 13 disposé sur la ligne d'alimentation externe 2. Ce module de commande 12 régule la tension de sortie dans une plage de tension sensiblement voisine de celle de la tension caténaire (tension typique de 750 V) afin de permettre un fonctionnement identique du module de traction 3 que celui-ci soit alimenté directement par le système d'alimentation autonome 6 ou par la caténaire 7.

Le procédé de pilotage de l'alimentation du tramway va maintenant être décrit.

Lorsque le tramway circule sur une portion de voie non équipée d'une caténaire 7, le module de traction du tramway est alimenté par le seul dispositif d'alimentation autonome 6 qui est alors en mode actif, c'est à dire qu'il fonctionne en générateur d'énergie, le pantographe 5 étant alors par exemple placé en position descendue sur commande du conducteur. Durant cette phase, le pantographe 5 n'est pas raccordé à une caténaire et aucun courant ne circule dans la ligne d'alimentation externe 2 du tramway. Le module de commande 12 reçoit alors du capteur 13 l'information selon laquelle le courant Iₑₓₜ dans la ligne externe 2 est nul et procède à la régulation de la tension de sortie à une valeur nominale de l'ordre de 750 V.

Lorsque le tramway arrive sur une zone équipée d'une caténaire 7, le conducteur commande le déploiement du pantographe 5 pour que ce dernier vienne au contact de la caténaire 7. Durant cette phase le système d'alimentation autonome 6 est toujours en mode actif et le module de commande 12 du système d'alimentation autonome 6, qui reçoit et analyse en permanence la valeur du courant traversant le capteur de courant 13 détecte l'instant où le courant Iₑₓₜ devient non nul, cet instant correspondant sensiblement à l'instant où le pantographe 5 est connecté à la caténaire 7.

A partir de cet instant où un courant Iₑₓₜ non nul est détecté par le capteur 13, le système d'alimentation autonome 6 étant toujours en mode actif, le module de commande 12 procède au pilotage de la tension de sortie du système d'alimentation autonome 6 de manière à réguler le courant Iₑₓₜ circulant dans la ligne d'alimentation externe 2 à une valeur proche de zéro. Cette régulation du courant Iₑₓₜ peut par exemple être effectuée par un calculateur suivant le schéma de commande de la figure 2 dans lequel la valeur du courant Iₑₓₜ issue du capteur 13 est envoyée dans une première et une seconde branche. La première branche comporte un comparateur 20 calculant la différence entre un courant de référence I_{ref} choisi nul et la valeur du courant mesurée Iₑₓₜ. La sortie du comparateur 20 est envoyée dans un bloc 21 qui calcule une tension de consigne U_{bus/ref} proche de la tension caténaire afin d'annuler sensiblement le courant Iₑₓₜ, une mesure de la tension caténaire étant effectuée à l'aide d'un capteur pour pré-positionner U_{bus/ref} autour de cette tension caténaire, et qui transmet cette tension de consigne U_{bus/ref} à un bloc de contrôle 22. Conformément à la figure 2, la seconde branche comporte un bloc 23 procédant au calcul de la valeur absolue de la valeur du courant Iₑₓₜ puis à la comparaison de cette valeur avec un seuil proche de zéro et par exemple choisi égal à 50 mA. L'information selon laquelle la valeur absolue du courant Iₑₓₜ est supérieure au seuil est ensuite envoyée en entrée du bloc de contrôle 22 qui procède au blocage de l'émission de la nouvelle tension de consigne U_{bus/ref} tant que le courant Iₑₓₜ est inférieur au seuil de courant.

Cette régulation de la tension de sortie du système d'alimentation autonome 6 lorsque le bus d'alimentation continu 1 est simultanément alimenté par la caténaire 7 et par le système d'alimentation autonome 6 en mode actif, permet d'éviter que le système d'alimentation autonome 6 ne se décharge au travers de la caténaire 7 lorsque la tension caténaire est inférieure à la tension de sortie du système d'alimentation autonome 6.

Successivement à la détection du raccordement du pantographe 5 à la caténaire 7, le système d'alimentation autonome 6 est placé en mode passif soit de manière automatique à l'aide d'une temporisation, soit de manière manuelle sur commande du conducteur. Une fois le système d'alimentation autonome 6 en mode passif, c'est à dire qu'il ne fournit plus d'énergie au bus d'alimentation continu 1, le module de traction 3 est alimenté exclusivement par la caténaire 7 au travers de la ligne d'alimentation externe 2 et le système d'alimentation autonome 6 recevant également du courant de la ligne d'alimentation externe 2 permettant la recharge en énergie cinétique de son volant d'inertie, en particulier lors de l'immobilisation du tramway dans une station d'arrêt ou lors des phases de freinage où toute la puissance disponible à la caténaire peut être utilisée pour recharger le système d'alimentation autonome 6.

Lorsque le tramway s'apprête à quitter la zone équipée de la caténaire 7 pour rentrer dans une zone non équipée, le système d'alimentation autonome 6 est basculé de nouveau en mode actif soit sur commande du conducteur, soit de manière automatique par exemple par interaction avec une balise disposée le long de la voie ou encore par estimation de la position par un calculateur. Durant cette phase le bus d'alimentation continu 1 est simultanément alimenté par le système d'alimentation autonome 6 et la ligne d'alimentation externe 2, et le module de commande 12 régule alors la tension de sortie du système d'alimentation autonome 6 de manière à annuler sensiblement le courant Iₑₓₜ circulant dans la ligne d'alimentation externe, et éviter ainsi la décharge éventuelle du système d'alimentation autonome 6 au travers de la caténaire 7.

Le pantographe 5 peut alors être déconnecté de la caténaire 7 soit naturellement en parvenant à l'extrémité de la caténaire 7, soit sur commande du conducteur, la déconnexion s'effectuant alors sans risque d'apparition d'arc électrique du fait que le courant est sensiblement nul dans la ligne d'alimentation externe 2 grâce à la régulation effectuée par le module de commande 12.

Le dispositif et le procédé de pilotage de l'alimentation du tramway selon l'invention permettent donc de détecter très simplement l'instant où le pantographe est connecté à la caténaire et d'optimiser ainsi la charge du système d'alimentation autonome en empêchant toute décharge rapide du système d'alimentation autonome au travers de la caténaire. De plus, le procédé selon l'invention permet de supprimer tout risque d'apparition d'arc électrique à la déconnexion du pantographe, ce qui permet d'augmenter considérablement la durée de vie des éléments.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation non représentée, l'organe de connexion pourra être constitué d'un patin coopérant avec une infrastructure d'alimentation externe constituée d'un rail.

## Revendications

1. Procédé de pilotage de l'alimentation en énergie électrique d'un véhicule à traction électrique destiné à fonctionner en mode d'alimentation externe ou en mode d'alimentation autonome, en fonction de la présence ou de l'absence d'une infrastructure d'alimentation externe (7) le long de la voie de circulation dudit véhicule, ledit véhicule comportant un bus d'alimentation continu (1) connecté à la fois à un système d'alimentation autonome (6) embarqué à bord du véhicule et à une ligne d'alimentation externe (2) pouvant être raccordée à une infrastructure d'alimentation externe (7) au moyen d'un organe de connexion (5), **caractérisé en ce qu'**on détecte la connexion dudit organe de connexion (5) avec ladite infrastructure d'alimentation externe (7) en mesurant le courant traversant la ligne d'alimentation externe (2), la présence d'un courant non nul dans la ligne (2) signalant la présence d'une infrastructure d'alimentation externe (7) connectée audit organe de connexion (5).

2. Procédé de pilotage de l'alimentation électrique d'un véhicule selon la revendication 1, **caractérisé en ce que**, lorsque le véhicule se trouve dans une phase d'alimentation transitoire durant laquelle le bus alimentation continu (1) est simultanément alimenté en énergie par le système d'alimentation autonome (6) et raccordé à la l'infrastructure d'alimentation externe (7), on pilote la tension de sortie du système d'alimentation autonome (6) de manière à ce que le courant traversant la ligne d'alimentation externe (2) soit sensiblement nul.

3. Procédé de pilotage de l'alimentation électrique d'un véhicule selon la revendication 2, **caractérisé en ce que** lorsque le véhicule circule en étant alimenté par le seul système d'alimentation autonome (6) et parvient sur une zone équipée d'une infrastructure d'alimentation externe (7), on procède aux étapes suivantes :
- détection du raccordement de l'organe de connexion (5) avec l'infrastructure d'alimentation externe par l'apparition d'un courant non nul dans la ligne d'alimentation ;
- pilotage de la tension de sortie du système d'alimentation autonome (6) de manière à annuler sensiblement le courant de la ligne d'alimentation externe (2);
- arrêt de la fourniture d'énergie par le système d'alimentation autonome (6) en direction du bus d'alimentation continu (1).

4. Procédé de pilotage de l'alimentation électrique d'un véhicule selon la revendication 2, **caractérisé en ce que** lorsque le véhicule circule en étant alimenté par la seule ligne d'alimentation externe (2) et parvient sur une zone non équipée d'une infrastructure d'alimentation externe (7), on procède préalablement à la déconnexion de l'organe de connexion avec l'infrastructure d'alimentation externe aux étapes suivantes :
- mise en marche du système d'alimentation autonome (6) de manière à ce que ce dernier fournisse de l'énergie au bus d'alimentation continu (1);
- pilotage de la tension de sortie du système d'alimentation autonome (6) de manière à annuler sensiblement le courant de la ligne d'alimentation externe (2).

5. Dispositif de pilotage de l'alimentation en énergie électrique d'un véhicule à traction électrique destiné à fonctionner en mode d'alimentation autonome ou en mode d'alimentation externe, en fonction de la présence ou non d'une infrastructure d'alimentation externe (7) le long de la voie de circulation dudit véhicule, le véhicule comportant un bus d'alimentation continu (1) connecté à la fois à un système d'alimentation autonome (6) embarqué à bord du véhicule et à une ligne d'alimentation externe (2) pouvant être raccordée à une infrastructure d'alimentation externe (7) au moyen d'un organe de connexion (5), **caractérisé en ce qu'**il comporte un capteur de courant (13) permettant de mesurer le courant circulant au travers de la ligne d'alimentation externe (2) afin de détecter le raccordement de l'organe de connexion (5) à l'infrastructure d'alimentation externe (7).

6. Dispositif de pilotage de l'alimentation électrique d'un véhicule selon la revendication 5, **caractérisé en ce que** ledit système d'alimentation autonome (6) est muni d'un module de commande (12) permettant de modifier la tension de sortie du système d'alimentation autonome (6).

7. Dispositif de pilotage de l'alimentation électrique d'un véhicule selon la revendication 6, **caractérisé en ce que** ledit système d'alimentation autonome (6) est constitué d'un système à accumulation cinétique d'énergie à volant d'inertie.

8. Dispositif de pilotage de l'alimentation électrique d'un véhicule selon l'une quelconque des revendications 5 à 7, **caractérisé en ce que** ledit organe de connexion (5) est constitué d'un pantographe porté par le véhicule et coopérant avec une infrastructure d'alimentation externe constituée d'une caténaire (7).

## Claims

1. Method of controlling the supply of electrical power to an electrically propelled vehicle designed to operate in an external power supply mode or in an autonomous power supply mode as a function of the presence or the absence of an external power supply infrastructure (7) along the route of said vehicle, which includes an uninterrupted power supply bus (1) connected both to an autonomous power supply system (6) on board the vehicle and to an external power supply line (2) that can be connected to an external power supply infrastructure (7) by means of a connection member (5), which method is **characterized in that** connection of said connection member (5) to said external power supply infrastructure (7) is detected by measuring the current flowing in said external power supply line (2), the presence of a non-zero current in the line (2) indicating the presence of an external power supply infrastructure (7) connected to said connection member (5).

2. Method according to Claim 1 of controlling the supply of electrical power to a vehicle, **characterized in that**, when the vehicle is in a transient power supply phase during which the uninterrupted power supply bus (1) is simultaneously supplied with energy by the autonomous power supply system (6) and connected to the external power supply infrastructure (7), the output voltage of the autonomous power supply system (6) is controlled so that the current flowing in the external power supply line (2) is substantially zero.

3. Method according to Claim 2 of controlling the supply of electrical power to a vehicle, **characterized in that**, when the vehicle is moving and supplied with power by the autonomous power supply system (6) only and reaches an area equipped with an external power supply infrastructure (7), the following steps are carried out:
- detecting connection of the connection member (5) to the external power supply infrastructure by the appearance of a non-zero current in the power supply line;
- controlling the output voltage of the autonomous power supply system (6) so that the current flowing in the external power supply line (2) is substantially canceled; and
- stopping the supply of power by the autonomous power supply system (6) to the uninterrupted power supply bus (1).

4. Method according to Claim 2 of controlling the supply of electrical power to a vehicle, **characterized in that**, when the vehicle is moving and is supplied with power only by the external power supply line (2) and reaches an area that is not equipped with an external power supply infrastructure (7), before disconnecting the connection member from the external power supply infrastructure, the following steps are carried out:
- starting the autonomous power supply system (6) so that it supplies power to the uninterrupted power supply bus (1); and
- controlling the output voltage of the autonomous power supply system (6) so that the current in the external power supply line (2) is substantially canceled.

5. System for controlling the supply of electrical power to an electrically propelled vehicle designed to operate in an autonomous power supply mode or in an external power supply mode as a function of the presence or absence of an external power supply infrastructure (7) along the route of said vehicle, which includes an uninterrupted power supply bus (1) connected both to an autonomous power supply system (6) on board the vehicle and to an external power supply line (2) that can be connected to an external power supply infrastructure (7) by means of a connection member (5), which system is **characterized in that** it includes a current sensor (13) for measuring the current flowing in the external power supply line (2) in order to detect connection of the connection member (5) to the external power supply structure (7).

6. System according to Claim 5 for controlling the supply of electrical power to a vehicle, **characterized in that** said autonomous power supply system (6) includes a control module (12) for modifying the output voltage of the autonomous power supply system (6).

7. System according to Claim 6 for controlling the supply of electrical power to a vehicle, **characterized in that** said autonomous power supply system (6) is a system including a flywheel for accumulating kinetic energy.

8. System according to any of Claims 5 to 7 for controlling the supply of electrical power to a vehicle, **characterized in that** said connection member (5) is a pantograph carried by the vehicle and adapted to cooperate with an external power supply infrastructure consisting of a overhead contact line (7).

## Patentansprüche

1. Verfahren zur Steuerung der Versorgung eines elektrischen Triebfahrzeugs mit elektrischer Energie, das dazu bestimmt ist, in der Betriebsart externe Versorgung oder in der Betriebsart autonome Versorgung betrieben zu werden, abhängig vom Vorhandensein oder von der Abwesenheit einer externen Versorgungsinfrastruktur (7) entlang des Fahrgleises des Fahrzeugs, wobei das Fahrzeug einen Gleichstromversorgungsbus (1) aufweist, der gleichzeitig mit einem autonomen Versorgungssystem (6) an Bord des Fahrzeugs und mit einer externen Versorgungsleitung (2) verbunden ist, die an eine externe Versorgungsinfrastruktur (7) mittels eines Verbindungsorgans (5) angeschlossen werden kann, **dadurch gekennzeichnet, dass** die Verbindung des Verbindungsorgans (5) mit der externen Versorgungsinfrastruktur (7) erfasst wird, indem der die externe Versorgungsleitung (2) durchfließende Strom gemessen wird, wobei das Vorhandensein eines Stroms ungleich Null in der Leitung (2) das Vorhandensein einer externen Versorgungsinfrastruktur (7) anzeigt, die mit dem Verbindungsorgan (5) verbunden ist.

2. Verfahren zur Steuerung der Stromversorgung eines Fahrzeugs nach Anspruch 1, **dadurch gekennzeichnet, dass**, wenn das Fahrzeug sich in einer Übergangsversorgungsphase befindet, während der der Gleichstromversorgungsbus (1) gleichzeitig vom autonomen Versorgungssystem (6) mit Energie versorgt wird und an die externe VersorgungsInfrastruktur (7) angeschlossen ist, die Ausgangsspannung des autonomen Versorgungssystems (6) so gesteuert wird, dass der die externe Versorgungsleitung (2) durchquerende Strom im Wesentlichen Null ist.

3. Verfahren zur Steuerung der Stromversorgung eines Fahrzeugs nach Anspruch 2, **dadurch gekennzeichnet, dass**, wenn das Fahrzeug fährt, indem es nur vom autonomen Versorgungssystem (6) versorgt wird, und in eine mit einer externen Versorgungsinfrastruktur (7) ausgestattete Zone kommt, die folgenden Schritte durchgeführt werden:
- Erfassung des Anschlusses des Verbindungsorgans (5) an die externe Versorgungsinfrastruktur durch Auftreten eines Stroms ungleich Null in der Versorgungsleitung;
- Steuern der Ausgangsspannung des autonomen Versorgungssystems (6) derart, dass der Strom der externen Versorgungsleitung (2) im Wesentlichen zu Null wird;
- Beenden der Energielieferung vom autonomen Versorgungssystem (6) in Richtung des Gleichstromversorgungsbusses (1).

4. Verfahren zur Steuerung der Stromversorgung eines Fahrzeugs nach Anspruch 2, **dadurch gekennzeichnet, dass**, wenn das Fahrzeug fährt, indem es nur von der externen Versorgungsleitung (2) versorgt wird, und in eine Zone kommt, die nicht mit einer externen Versorgungsinfrastruktur (7) ausgestattet ist, vor dem Abschalten des Verbindungsorgans mit der externen Versorgungsinfrastruktur die folgenden Schritte durchgeführt werden:
- Einschalten des autonomen Versorgungssystems (6), damit letzteres dem Gleichstromversorgungsbus (1) Energie liefert;
- Steuern der Ausgangsspannung des autonomen Versorgungssystems (6) derart, dass der Strom der externen Versorgungsleitung (2) im Wesentlichen zu Null wird.

5. Vorrichtung zur Steuerung der Versorgung eines elektrischen Triebfahrzeugs mit elektrischer Energie, das dazu bestimmt ist, in der Betriebsart externe Versorgung oder in der Betriebsart autonome Versorgung betrieben zu werden, abhängig vom Vorhandensein oder von der Abwesenheit einer externen Versorgungsinfrastruktur (7) entlang des Fahrgleises des Fahrzeugs, wobei das Fahrzeug einen Gleichstromversorgungsbus (1) aufweist, der gleichzeitig mit einem autonomen Versorgungssystem (6) an Bord des Fahrzeugs und mit einer externen Versorgungsleitung (2) verbunden ist, die an eine externe Versorgungsinfrastruktur (7) mittels eines Verbindungsorgans (5) angeschlossen werden kann, **dadurch gekennzeichnet, dass** sie mindestens einen Stromsensor (13) aufweist, der es ermöglicht, den durch die externe Versorgungsleitung (2) fließenden Strom zu messen, um den Anschluss des Verbindungsorgans (5) an die externe Versorgungsinfrastruktur (7) zu erfassen.

6. Vorrichtung zur Steuerung der Stromversorgung eines Fahrzeugs nach Anspruch 5, **dadurch gekennzeichnet, dass** das autonome Versorgungssystem (6) mit einem Steuermodul (12) versehen ist, das es ermöglicht, die Ausgangsspannung des autonomen Versorgungssystems (6) zu verändern.

7. Vorrichtung zur Steuerung der Stromversorgung eines Fahrzeugs nach Anspruch 6, **dadurch gekennzeichnet, dass** das autonome Versorgungssystem (6) aus einem System mit kinetischer Energiespeicherung mit Schwungrad besteht.

8. Vorrichtung zur Steuerung der Stromversorgung eines Fahrzeugs nach einem der Ansprüche 5 bis 7, **dadurch gekennzeichnet, dass** das Verbindungsorgan (5) aus einem Stromabnehmer besteht, der vom Fahrzeug getragen wird und mit einer externen Versorgungsinfrastruktur zusammenwirkt, die aus einer Fahrleitung (7) besteht.
